# FASCICULE DE BREVET EUROPEEN

(11) **EP 1 648 761 B1**
(45) Date de publication et mention de la délivrance du brevet: **11.06.2008**
(21) Numéro de dépôt: 04742483.3
(22) Date de dépôt: 13.04.2004
(51) Int. Cl.: B63G 8/00

(54) **STATION SOUS-MARINE AUTONOME**
AUTONOME UNTERWASSERSTATION
SELF-CONTAINED SUBMARINE STATION

(30) Priorité: 14.04.2003 FR 0304615; 14.04.2003 FR 0304616
(43) Date de publication de la demande: 26.04.2006
(73) Titulaire: Tarkovacs, Stefan, 95520 Osny (FR)
(72) Inventeur: Tarkovacs, Stefan, 95520 Osny (FR)
(86) Numéro de dépôt international: PCT/FR2004/000900
(87) Numéro de publication internationale: WO 2004/092006

(56) Documents cités:
- WO-A-00/58564
- WO-A-95/24955
- WO-A-03/011683
- DE-A- 19 857 173
- DE-U- 8 601 572
- FR-A- 2 804 935
- GB-A- 1 594 117
- US-A- 3 548 605
- US-A- 3 635 347
- US-B1- 6 189 476
- RIGAUD V ET AL: "New methods for deep sea intervention on benthic laboratories. DESIBEL project. Final results, comparisons of concepts and at sea validation" OCEANS '98 CONFERENCE PROCEEDINGS NICE, FRANCE 28 SEPT.-1 OCT. 1998, NEW YORK, NY, USA,IEEE, US, 28 septembre 1998 (1998-09-28), pages 352-356, XP010311812 ISBN: 0-7803-5045-6
- CESSOU M: "OPERATION BOEHLEN" PETROLE ET TECHNIQUES, ASSOCIATION FRANCAISE DES TECHNICIENS DU PETROLE. PARIS, FR, no. 256, octobre 1978 (1978-10), pages 9-18, XP000960558 ISSN: 0152-5425

## Description

La présente invention concerne un dispositif conçu comme une station sous marine autonome capable de se stabiliser et de travailler sous la surface des océans et à la profondeur désirée, à divers travaux selon les équipements et les automatismes installés, permettant un fonctionnement relais avec les opérateurs de surface.

Son utilité tient au fait que de nombreuses opérations en mer, industrielles ou scientifiques, sont perturbées en surface par la houle ou les intempéries.
En profondeur, les interventions sont limitées tant en moyens techniques qu'en durée.

Son principe vise à remédier à ces inconvénients par des solutions intermédiaires.

En général, ces travaux se font depuis des bâtiments de surface mobiles ou fixes, flottants ou fondés, ou bien par l'intervention en profondeur de robots comment par example le système SIRENE décrit dans l'article "New methods for Deep Sea Intervention on Benthic Laboratories".
La première situation rencontre les difficultés susdites d'intempéries, la seconde est très limitée par les conditions extrêmes de la grande profondeur (pression, éloignement physique) et ne permet que des tâches bien spécifiques.

Le dispositif selon l'invention concerne une station sous marine autonome et automatisée, caractérisé en ce qu'il permet une position sous marine stable de travail ainsi qu'une autonomie d'action et donc un relais d'ouvrage entre les fonds marins et les bâtiments de surface sans intervention humaine continue.

En particulier, il est apte à accomplir une tâche en continu quelles que soient les conditions météorologiques. Il représente un compromis entre les plate formes classiques de surface pour le forage en mer et le principe du submersible, et peut être équipé, sur plusieurs niveaux de ponts, de différents systèmes et outils selon les travaux à effectuer.

Le dispositif selon l'invention comporte deux catégories d'équipements :
- les équipements propres à la station
- les équipements opérationnels interchangeables à chaque opération et conçus pour répondre à des missions très différentes.

Des modes d'exécution de l'invention seront décrits ci-après, à titre d'exemples non limitatifs, avec référence aux dessins annexés.

### Structure et équipements propres

Le dispositif est constitué d'une structure métallique (S) dimensionnée en fonction des charges prises en compte et les surfaces requises selon la version retenue, de manière à assurer la rigidité de l'ensemble.

Cette structure comporte plusieurs niveaux horizontaux ou ponts (P1, P2, P3,P4) configurés selon les équipements opérationnels prévus. Ces ponts, conçus pour évoluer dans l'élément liquide, sont composés de treillis métalliques pouvant supporter des charges importantes et assemblés sur poutrelles transversales. Ils sont modulables.

Le pont inférieur (P1) est équipé de moyens de propulsion (M1, M2, M3, M4), de systèmes d'ancrage éventuels, d' instruments de mesures et d'analyses choisis selon la mission, d' outils techniques propres aux tâches prévues, tel que matériels de vidéo, unité de carottage et de prélèvements, instruments d'exploration sonar ou magnétique, d'éclairage, la liste n'étant pas exhaustive.

Le pont intermédiaire (P2) supporte quatre ballasts (A1, A2, A3, A4) positionnés aux quatre angles et dont la capacité est calculée pour compenser d'importantes variations de charges, selon les travaux effectues.
Deux compartiments étanches renferment leurs équipements annexes (pompes, compresseurs...).
Gérés simultanément par ordinateur, ils gardent l'assiette de la station et rectifient la position verticale selon toute variation non programmée.

Le pont intermédiaire (P2) supporte par ailleurs deux bancs de batteries (B1, B2) en compartiments étanches, permettant l'autonomie de la station.

Le pont supérieur (P3) comporte le poste de contrôle-commandes (K) relié à tous les ponts et à leurs équipements, ainsi qu'à une bouée de surface (Y) par câble.
Ce pont, de planchers modulables en fonction des utilisations, comporte une zone sécurisée (P4) destinée aux plongeurs ayant accès au poste de contrôle-commandes (K).

Les structures porteuses longitudinales de la station comportent, fixées sur la face extérieure, des caissons métalliques de grand volume (C) et solidaires de ladite structure. Ces caissons sont calculés pour permettre à la station, dans toutes ses configurations prévues, d'atteindre une masse volumique sensiblement égale à celle de l'eau (égale à 1). Lors de chaque nouvelle opération en mer et selon les équipements installés sur la station, des compartiments spécifiques (C') de ces caissons seront plus ou moins lestés afin de garder à l'ensemble constitué une flottabilité neutre.

### Flottabilité

Le dispositif, dont la structure est initialement calculée pour une masse volumique égale à celle de l'élément liquide dans lequel il évolue, impose des variations de masse, soit en fonction de ses équipements, soit en fonction des travaux effectués.
Pour atteindre la masse volumique exacte, deux systèmes sont cumulés:
- la flottabilité est réglée à la mise en eau, selon l'équipement installé, par le remplissage de compartiments (C'), appelés « lests primaires » prévus à cet effet et situés dans les caissons de la structure.
   La station obtient sa flottabilité neutre.
- parvenue à la profondeur voulue, la station maintient automatiquement position et assiette grâce aux quatre ballasts (A), dont les charges sont équilibrées automatiquement par pompes et compresseurs en deux installations étanches (D) et gérées depuis le poste de contrôle embarqué (K).
   Ils fonctionnent, assistés par ordinateur, de la même manière qu'à bord d'un submersible classique et entrent en action en fonction des contraintes, tels que les courants marins et les répartitions de charges.
   Leur capacité doit être calculée en fonction des variations de masses induites par les tâches projetées.

### Motorisation

Le dispositif est équipé de moyens de propulsion (M1, M2, M3, M4) limités en capacité aux manoeuvres de positionnement.

Tracté ou transporté sur le lieu de son intervention, il n'est pas conçu pour une navigation propre, mais uniquement comme une usine capable de modifier sa position.
Quatre hydropropulseurs au moins ou autres types de propulseurs sous marins alimentés par énergie électrique, orientables (ou fixes et équipés de tuyères orientables), sont disposés sur le pont inférieur (P1) de manière à permettre toutes manoeuvres horizontales et verticales. L'ensemble, alimenté par batterie, est relié au poste de contrôle-commandes (K) et est géré par assistance informatique appliquant les données de positionnement pré établies (coordonnées X et Y), après comparaison aux données transmises avant et en cours d'opération par relevés GPS.

### Energie

Le dispositif obtient son autonomie énergétique grâce à deux séries de batteries (B1, B2) logées sur le pont intermédiaire (P2) et protégées par un compartiment et des connections étanches.

Ces batteries peuvent être remplacées depuis la surface, de manière à ne pas devoir interrompre la station durant une tâche prolongée. Dans ce but, deux bancs distincts sont prévus, dont un seul est en fonctionnement. En cas d'épuisement du premier, le poste de contrôle-commandes (K) permet de passer sur le second banc, et laisse ainsi la possibilité de remplacer ou recharger le premier.
Le basculement d'un banc à l'autre se fait automatiquement et déclenche un signal d'alarme lumineux sur le poste de contrôle embarqué (K), lumineux, sonore et radio depuis la bouée (Y).

### Contrôle-commandes

Le dispositif est équipé d'une console (K) comprenant un écran et un pupitre étanche permettant de gérer manuellement toutes les fonctions de la station par un plongeur.

Ces fonctions sont exactement reproduites à bord d'une bouée de surface (Y), reliée au poste de contrôle (K) de la station par un câble. Ce câble est muni d'un système de tension capable de compenser des différences importantes de niveau provoquées par la houle.
Il se compose d'une longueur redondante en forme de boucles fixée sur un axe extensible.

Ces deux postes permettent d'intervenir sur tous les paramètres de la station, de ses équipements et de l'action en cours, de contrôler l'état de ses moyens, de modifier sa programmation, et ce depuis la surface comme sur la station elle-même.

Selon l'état de la technique, il peut être envisagé d'effectuer ces opérations par transmissions immatérielles.

Deux champs d'applications sont concernés :
- Les paramètres concernant la gestion de la station proprement dite, c'est à dire son positionnement par les éléments de propulsion et par le système des ballasts, ainsi que son système GPS de repérage, son autonomie énergétique et le système de contrôle de sécurité et d'étanchéité.
- les paramètres propres à l'installation opérationnelle embarquée, dont deux versions sont évoquées dans les domaines de la récupération d'hydrocarbures et de fouilles sous marines.
Ces paramètres concernent la gestion des outils mis en oeuvre, tel que le remplissage de cuves de stockage, le fonctionnement des pompes et électrovannes, le contrôle de verrouillage des pipes, le traitement chimique des hydrocarbures, les moyens d'éclairage et de traitement de l'image, la tension de câbles supportant des outils en plongée, la gestion de la nacelle et de ses équipements propres. Cette liste n'étant pas exhaustive.

### Liaisons de surface

Les communications avec la surface se font par l'intermédiaire soit de plongeurs sur le poste de contrôle-commande embarqué (K), soit en surface par la bouée technique (Y) conçue comme poste de double commande.
Un système radio de commandes à distance peut aussi être installé pour fonctionner avec un navire de surface, soit par réception depuis la bouée, soit en transmission directe avec la station.
Un système de déclenchement automatique d'alarme radio émis par la bouée technique (Y) concerne les postes de sécurité, tel que l'état des batteries, des données limites de position, le blocage d'un processus en cours.

### Positionnement

Un relevé GPS est effectué automatiquement de manière régulière depuis le poste de contrôle-commande (K), permettant de corriger la position de la station si les coordonnées diffèrent de celles pré établies, et ce, quelles que soient les conditions météorologiques. La station est conçue pour maintenir une position stable paramétrée sur le poste contrôle-commande (K).

### Liaisons avec les fonds marins

Les liaisons avec les fonds marins concernent les tâches entreprises, hormis d'éventuels ancrages, et se font par l'intermédiaire d'outils embarqués, tel que la nacelle ou la colonne souple de récupération.
En outre, selon les missions, le pont inférieur (P1) ou la nacelle (N) peuvent être équipés de tous les instruments de mesure et d'exploration jugés nécessaires.

### Ancrages

Les ancrages, lorsqu'ils sont jugés nécessaires, se font par l'intermédiaire des outils travaillant sur les fonds marins. Ceux-ci peuvent être reliés à des câbles guides entre deux ancres larguées depuis des bâtiments de surface.
La station, de par son équipement, se maintient par ses propres moyens sur un positionnement programmé.

### Les équipements opérationnels

Le dispositif selon l'invention dispose en plusieurs niveaux de larges surfaces porteuses (ou ponts).
Ces surfaces sont dimensionnées en fonction des besoins pour l'installation des équipements propres à la station, décrits précédemment et des équipements dits « opérationnels » nécessaires aux travaux entrepris.

Ces équipements opérationnels sont :

### I) Equipement opérationnel destiné à la collecte d'hydrocarbures échappés d'une épave coulée par grands fonds.

Le dispositif selon l'invention est équipé d'un module de traitement d'hydrocarbures (H) capable de travailler en immersion.

Il faut distinguer deux méthodes de récupération, et ainsi deux modules distincts :

La récupération (R1) par pompage au moyen de pompes (Q) installées sur le pont inférieur (P1), atteignant la source au moyen de tous pipes souples ou autres conduits. Cette configuration consiste à raccorder directement le pompage (Q) à l'installation de stockage (U) de la station.

La récupération (R2) par remontée spontanée depuis la source.
Cette configuration consiste à canaliser les hydrocarbures via une colonne ou riser souple, raccordé au module de traitement (H).

Cette méthode de récupération nécessite trois phases matérialisées par trois dispositifs rassemblés au sein d'une même cuve.
- le séparateur eau / hydrocarbures (Z) occupant la base du module de traitement d'hydrocarbures (H) située sur le pont intermédiaire (P2) communicant avec l'installation de récupération, et compartimenté de manière qu'au fur et à mesure que le niveau d'hydrocarbures augmente, l'eau de mer est évacuée par le bas au moyen de vannes (Z1, Z2) munies de clapets anti-retour et asservies à un contrôle de niveau bas (Z3) des hydrocarbures déclenchant l'arrêt de ces vannes. Sauf arrêt, elles fonctionnent en continu.
- le traitement chimique des hydrocarbures, effectuée dans la partie supérieure (T) du séparateur (Z), peut entre autres, consister en une opération de liquéfaction par injection d'éthers de colzas, afin de faciliter le pompage en amont et, en aval, le stockage au niveau de la station.
- Le pompage est effectué par une pompe (Q) installée dans le dernier compartiment haut du module de traitement d'hydrocarbures (H), qui envoie par pipes les hydrocarbures liquéfiés vers une ou plusieurs cuves de stockage (U). Cette pompe (Q) est munie d'un système d'arrêt mesurant, suivant réglage préalable, la viscosité ou la densité du produit pompé, de manière à interdire le pompage d'eau.

Le stockage se fait dans une ou plusieurs cuves (U), situées sur le pont supérieur (P3).

La structure de la station est prévue pour laisser libre depuis le haut tout l'espace de manoeuvre au-dessus de la zone de stockage.

Selon les quantités envisagées, la nature des produits, les impératifs techniques, la capacité des ballasts, une seule ou plusieurs cuves pourront être installées, raccordées à la pompe du module de traitement (H) par des pipes munis d'électrovannes.

Les cuves de stockage (U) sont équipées de systèmes de contrôle de remplissage.

Les électrovannes, les dispositifs de contrôle de remplissage, les systèmes d'ouverture et d'obturation des clapets cuve / pipe, les pompes (Q) sont asservies au poste de contrôle (K) embarqué de la station sous marine, qui en assure la gestion par son système informatique centralisé.

La capacité de stockage sous marin est conçue pour permettre une récupération ultérieure par pompage depuis la surface lorsque la météorologie le permet et de façon plus rapide que le temps nécessaire à la récupération proprement dite, effectuée en profondeur par la station.

Cette opération de récupération finale est effectuée selon les circonstances soit par la remontée de la station à la surface, soit par un pompage depuis un navire de surface, sans que la station ne cesse de travailler.

Pour cela, elle est équipée :
- d'un accès de pompage (W1) sur la partie haute du module de traitement (H),
- d'un accès de pompage (W2) sur la ou les cuves de stockage (U),
Ces accès sont munis de clapets conçus pour être ouverts après raccordement des pipes, eux-mêmes équipés de ce clapet, afin d'éviter les fuites en mer, d'un côté comme de l'autre.

Le dispositif est équipé :
- sur le pont inférieur (P1) d'un système (L) de tension de câbles capable de travailler en immersion, conçu pour supporter les différents systèmes de récupération en grandes profondeurs.
   Ce système consiste en un ou plusieurs treuils enrouleurs dont la motorisation alimentée par les batteries de la station, se trouve logée sur chaque axe d'enroulement, en compartiment étanche à l'intérieur de chaque enrouleur. La partie rotative de ce moteur entraîne l'enrouleur, la partie fixe étant solidaire de l'axe.
- sous la station et connecté au module de traitement, d'un riser souple de récupération. Celui-ci, en cas d'opération en grande profondeur mais nécessitant que la station n'y descende pas elle-même sera défini comme suit :

L'outil opérationnel concerne un dispositif de colonne souple sous tension par câbles propre à permettre le déploiement vertical d'une longueur de plusieurs milliers de mètres en milieu marin. Ce dispositif est conçu dans le but de récupérer vers la surface des matières gazeuses, liquides, visqueuses ou solides émanant des fonds marins et remontant d'elles mêmes, libérées par exemple d'un navire coulé ou d'un puits de forage mal obturé.

Pour les colonnes souples de grands diamètres, les longueurs ordinairement possibles sont fonction de la résistance à la déchirure des matériaux employés, et de la capacité de ceux-ci à rester dans leur forme initiale quels que soient les éléments extérieurs (vents, courants, pressions, différences de température).
En fait, quelles que soient les matières employées, le rapport Résistance/Poids limite très rapidement en position verticale la longueur possible.

Afin de conserver les caractéristiques initiales d'une colonne souple tout en permettant de très grandes longueurs, la présente invention concerne un dispositif permettant de remédier à ces problèmes (résistance et comportement des matériaux employés) par une combinaison de masse minimum et de tension contrôlée donnant une rigidité relative à l'ensemble, sans autre limite de longueur que la résistance des câbles utilisés.

La méthode employée pour le report des charges est de nature à autoriser une colonne aussi longue que la résistance de ces câbles le permet.

L'outil opérationnel ou « riser pour grandes profondeurs » est composée d'une colonne souple d'éléments (B) de longueur fixe assemblés entre eux par des éléments rigides (chaises C et C') et terminée par un cône (jupe J) permettant le captage à la source des matières à récupérer. L'ensemble est maintenu en tension depuis la face inférieure de la station (ou depuis une installation de surface) par des câbles (T) traversant les chaises.

Des modes d'exécution de l'invention seront décrits ci-après, à titre d'exemples non limitatifs, avec référence aux dessins annexés.

Ce dispositif est constitué :
a) d'une colonne de matière fine et souple issue de l'industrie des plastiques et des dérivés pétroliers (exemple film polyéthylène) en forme de tube (B) d'un diamètre de un mètre et par tronçons de 200 mètres (B1 à Bn).

Sur l'ensemble de leur longueur, ces tronçons (B1 à Bn) sont quadrillés d'une armature de fibres de nylon noyées dans la matière et disposées de manière à augmenter la résistance dans le sens de la longueur.

Les extrémités de ces tronçons souples sont d'une épaisseur renforcée sur une longueur de 1,5 mètre (M) de manière à supporter un serrage par collier (E) sans subir de détérioration.
Ces tronçons souples de colonne (B1 à Bn) comportent en leur milieu et à cinquante mètres de part et d'autre, trois anneaux (R1, R2, R3) semi rigides collés ou inclus dans la matière du film, sans toutefois présenter d'aspérités sur la face intérieure de ladite colonne.

Dans le cas de la récupération de produits visqueux, chacun de ces tronçons souples de 200 mètres (B1 à Bn) comportent, sur 20 mètres de leur partie basse et sur toute la surface (P), des trous circulaires de 5 millimètres de diamètre et pour une densité de 500 trous au m2.

Dans le cas de produits gazeux, les films souples ne sont pas perforés.
b) d'éléments de matière dure et de haute densité (par exemple de PVG) dénommées « chaises » (C) et comportant: trois parties :
   - Un tube rigide (A) en PVC d'une longueur de 4 mètres et d'un diamètre de 1 mètre, muni d'encoches à ses deux extrémités pour assurer le serrage par collier des tronçons souples (B), collé (soudure chimique) en son milieu à l'intérieur d'un bloc de (h) 2m x 1,4m x 1,4m.
   - un bloc de PVC (U) de h : 2m x 1,4m x 1,4m fabriqué en deux demi coques (U1, U2) de matière pleine.
      En chacun de ses angles, ce bloc (U) est perforé dans sa hauteur d'un canal d'un diamètre légèrement supérieur au diamètre des câbles de tension (T1 à T4), et équipé sur chaque arrête d'un système de serrage (S) et autobloquant (X).
      Ce bloc une fois assemblé autour du tube rigide est ceinturé d'une coque de mousse syntactique (W).
   - une coque de mousse syntactique (W) imbriquée sur l'extérieur du bloc de PVC (U) de manière à augmenter l'indice de flottabilité de la chaise.

Ces chaises (C) reçoivent sur leurs parties tubulaires rigides hautes et basses les tronçons souples enfilés (B) et serrés par collier (E).
c) de quatre câbles (par exemple en acier ou nylon) (T1 à T4) réglés et serrés à l'intérieur de chacune de ces chaises (C) et reportant ainsi la charge globale jusqu'en haut de la colonne, sans que les partie souples (B) y participent.

Ces câbles sont calculés pour supporter en milieu marin une charge globale représentant la masse de la colonne ainsi constituée.

Ces câbles sont munis d'une ancre (V) sertie dans le corps de la première chaise (C') (chaise basse), et remontent au travers de toutes les autres (C) jusqu'à un système général de tension, situé soit en surface (navire, structure sur bouée, plate forme offshore), soit sur une station sous marine.

Le système de serrage des câbles sur le corps cubique de chaque chaise (C) est constitué de deux principes : un principe de serrage par écrou ou clé (S) et un principe autobloquant (X).

### Principe de serrage par écrou ou clé (S)

Les deux demi coques en PVC (U1 et U2) sont perforées sur toute leur hauteur, dans chaque angle, d'un canal de diamètre suffisant pour laisser coulisser un câble (T1, T2, T3 ou T4).

Sur chaque arrête et situées à mi hauteur du corps cubique de la chaise, des entailles équipées de dispositifs de serrage des câbles par écrou sont disposées de manière à permettre le réglage des longueurs entre chaises.
Ces longueurs correspondent aux tronçons souples décrits précédemment (B).
Le réglage est effectué en mer lors de la mise en place, tronçon après tronçon sur la longueur totale nécessaire à l'opération de récupération.

### Principe autobloquant (X)

Le canal en sa partie inférieure est terminé sur trente centimètres par une forme conique permettant d'introduire un cône d'acier en deux parties et dont les faces intérieures concaves sont rainurées.

Ce cône venant se loger dans la partie conique du canal, de part et d'autre du câble, pince d'autant plus celui-ci qu'il tend à glisser vers le haut en cas de serrage insuffisant.
Des bouchons perforés en leur centre et non fermés, introduits par pincement et laissant coulisser les câbles, viennent obturer à la suite de la mâchoire cette partie conique du canal.
d) d'une « jupe » (J) en forme d'entonnoir, constituée du même film souple renforcé de nylon, située à la base de la colonne et d'un diamètre de 15 mètres à sa base et de 1 mètre à son sommet, terminée en partie haute par un tronçon tubulaire souple (I) d'un diamètre de 1 mètre et d'une longueur de 1 mètre enfilé sur le tube rigide (A) bas de la première chaise (C').

Cette jupe est cerclée de quatre armatures circulaires (O1 à O4) en matière indéformable pleine capable de maintenir la forme du cône et reliées entre elles par des filins (F) ancrés (V') dans la partie basse du bloc (U) de la première chaise, de manière à permettre un déploiement de la jupe en reportant son poids sur ladite chaise.

Ces armatures (O1 à O4) peuvent être constituées de la même matière et fabriquées solidairement avec la jupe (J), ou bien être rajoutées sur l'extérieur de celle-ci.

Dans le cas de la récupération de matières visqueuses ou solides, la partie souple de là jupe est perforée de trous (P') d'un diamètre de 5 millimètres sur toute sa circonférence et selon de larges bandes horizontales entre les cerclages (O1 à O4), selon une densité de 500 trous par m2.
Dans le cas de récupération de matières gazeuses ou liquides, aucun percement de la partie souple ne sera effectué.

La manoeuvre de descente en plongée se fera alors « jupe repliée », armatures (O1 à O4) en position verticale.

L'armature de plus grand diamètre (04), située à la base du dispositif, est équipée de systèmes d'ancrage (Z) soit pour des ancres fixes, soit pour recevoir des câbles horizontaux de guidage ancrés au fond.
L'ensemble constitue ainsi une colonne tendue et flexible dont les longueurs souples ne participent pas au report de charge.
Seules les chaises (C), bloquées en positions fixes et traversées par les câbles de tension (T1 à T4), transmettent à ces câbles la charge unique de plus ou moins 200 mètres de colonne souple (B).

L'ensemble immergé est donc supporté tous les 200 mètres par des éléments rigides (C) reportant tous les efforts sur les câbles tendus (T1 à T4) depuis le pont inférieur de la station ou d'une installation de surface.

La colonne est en partie basse terminée par une jupe (J) dont la partie large est proche de la source à capter, de manière à canaliser jusqu'à ladite installation la récupération des matières plus légères que l'eau.

### II) Equipement opérationnel destiné à l'exploration, l'étude et l'exploitation des fonds marins par nacelle.

Le dispositif selon l'invention est destiné à permettre, depuis la station sous marine stabilisée à quelques dizaines de mètres sous la surface, l'intervention en grandes profondeurs d'outils et d'instruments contrôlées depuis le poste de contrôle accessible aux plongeurs sur ladite station.

Le dispositif, installé sur le pont inférieur (P1) de la station est constitué d'une plate forme dénommée « nacelle » (N).

Son plancher, en treillis métallique, est doublé pour loger dans l'espace ainsi protégé (N1), ou « plateau technique », tous les instruments de mesure et d'exploration, d'éclairage, de traitement d'images et d'analyse.
Sur la partie supérieure du double plancher de la nacelle plus particulièrement destinée aux travaux, sont installés les outils, tel qu'un bras articulé (N2) un banc de batteries (N3) pour l'autonomie énergétique de la nacelle, une installation d'aspiration ou tout autre équipement selon les besoins.

Le dispositif selon l'invention, comporte sur le pont intermédiaire (P2) de la station, situés de part et d'autre de la nacelle, quatre treuils (N4) enrouleurs de câbles. La motorisation de ces treuils placée sur l'axe enrouleur en caisson étanche, est alimentée par les batteries de la station. Ces treuils sont destinés à faire descendre et remonter la nacelle et sont gérés par un calculateur d'assiette et de tension installé sur la station.

Le dispositif selon l'invention comporte un câble de liaison station-nacelle (N5), servant à piloter les équipements de la nacelle et à collecter les informations de ses instruments.

Un treuil motorisé (N5), situé sur le pont intermédiaire (P2) de la station, synchronisé aux treuils de suspension de ladite nacelle, déploie ce câble de transmission de données bidirectionnelles « nacelle-station ». Cette liaison a pour but de contrôler l'ensemble des paramètres de ladite nacelle ainsi que les opérations qu'elle effectue.

Le bras articulé (N2), selon l'invention est conçu pour être équipé, selon les besoins, par un godet ou une pince préhensile, un instrument de carottage ou de forage. Comme tous les équipements de la nacelle, il est alimenté en énergie électrique par les batteries de la nacelle et contrôlé depuis le poste de contrôle embarqué de la station.
Conçue pour descendre sous la station en très grandes profondeurs, la nacelle et toutes ses installations sont calculées pour résister à de fortes pressions.
Le dispositif, selon l'invention peut aussi servir de « benne-monte charge » sous marine à un engin de plongée n'ayant aucune capacité de stockage.

### III) Domaines d'application concernant la présente invention :

### Domaine industriel

- Exploitation des richesses sous marines
- Forages, carottages
- interventions sur épaves, forages.
- Opérations de pompage en grandes profondeurs et en surface.

### Domaine scientifique

- Analyses géologiques sous marines
- Etudes faune, flore, courants
- Archéologie sous marine
- Exploration sub-glacière des pôles.

### Les dessins annexés illustrent l'invention :

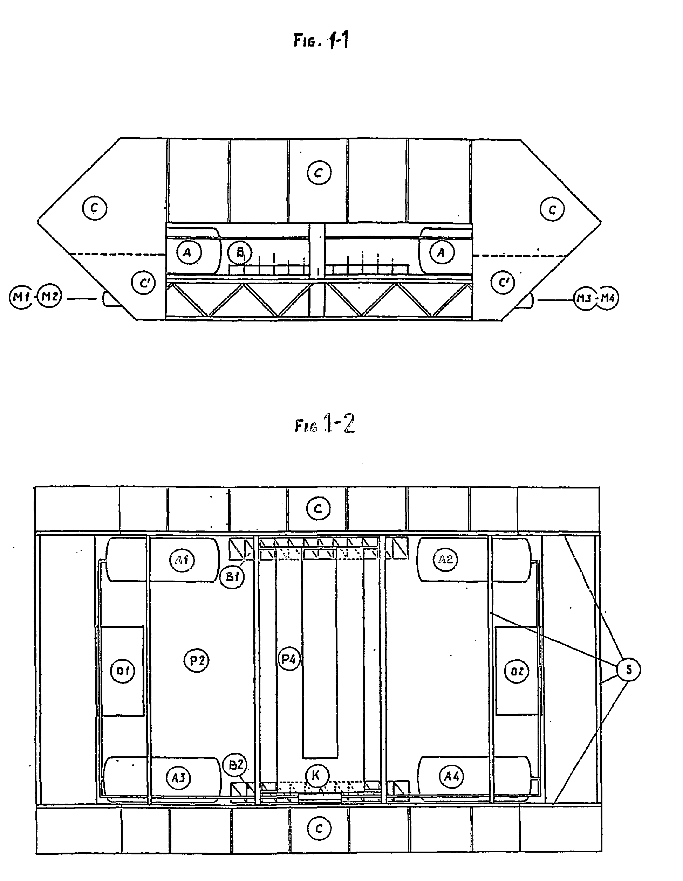

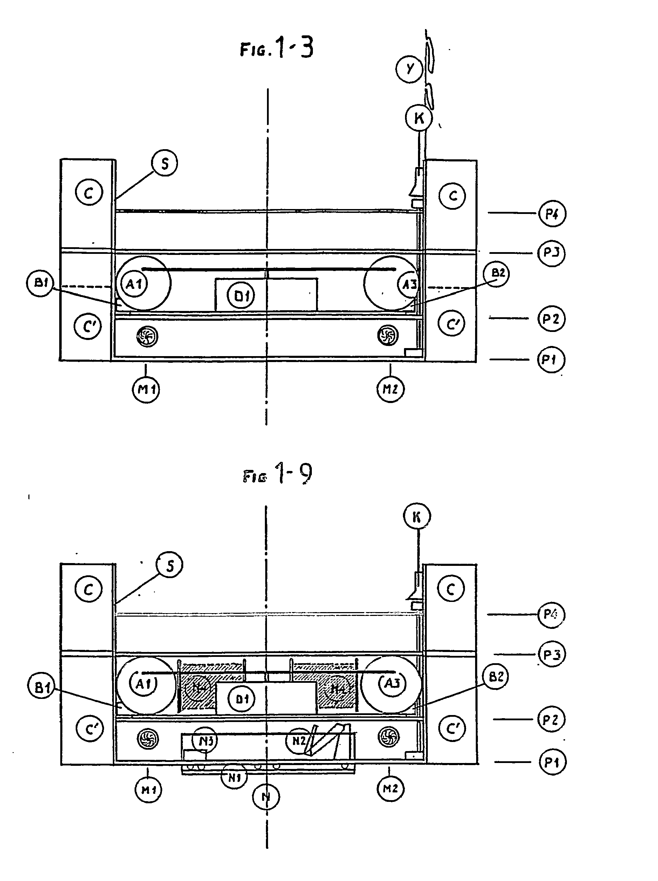

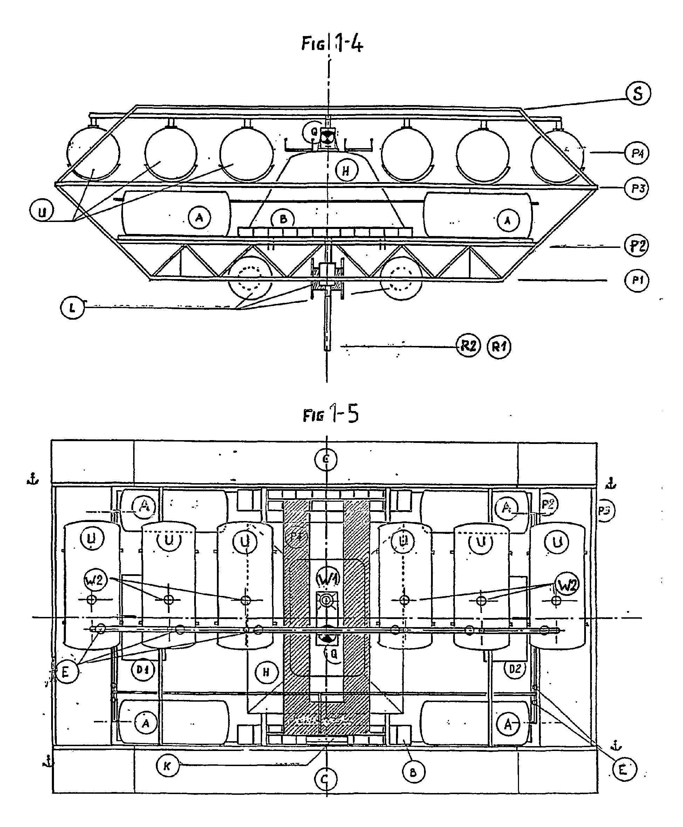

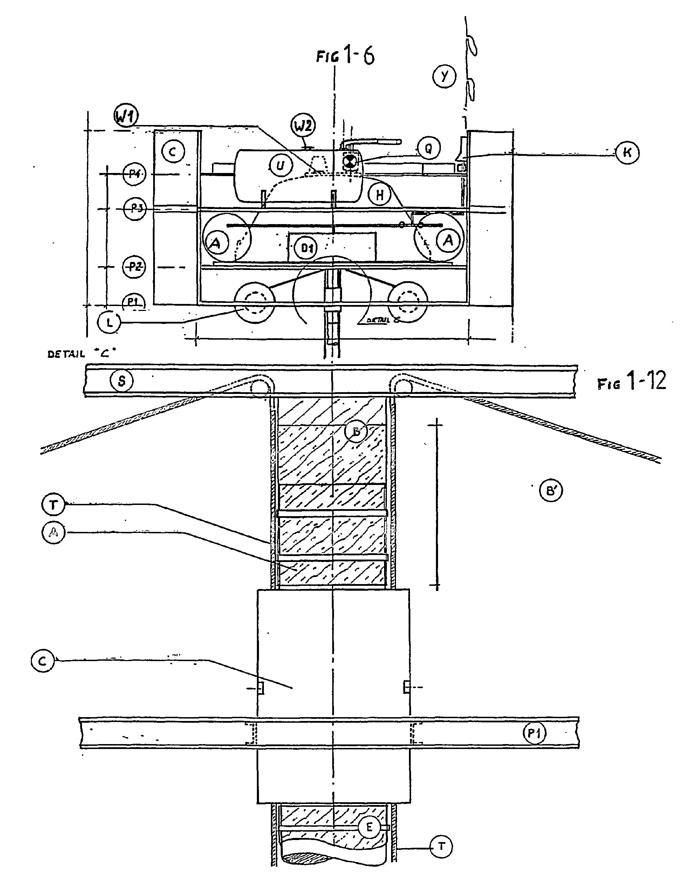

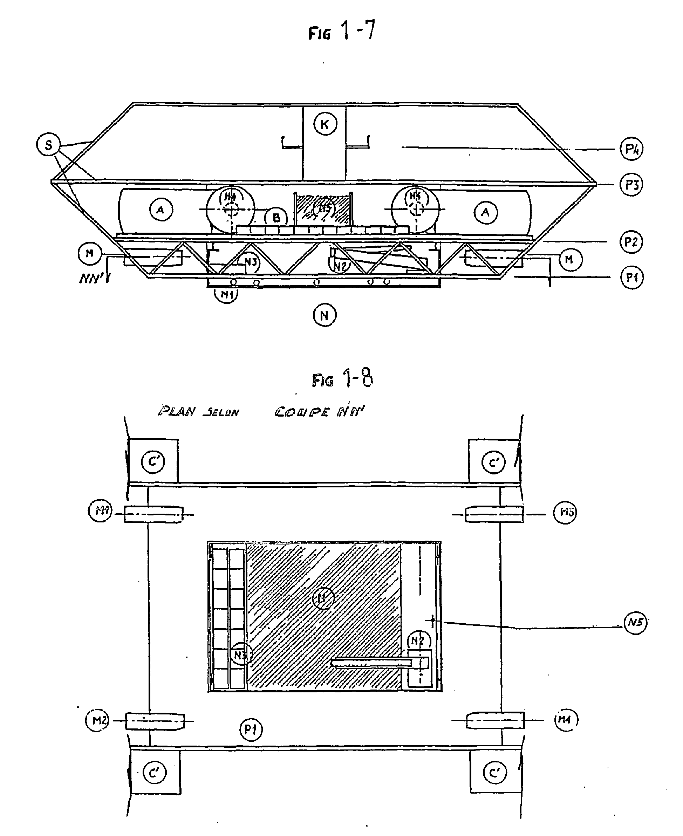

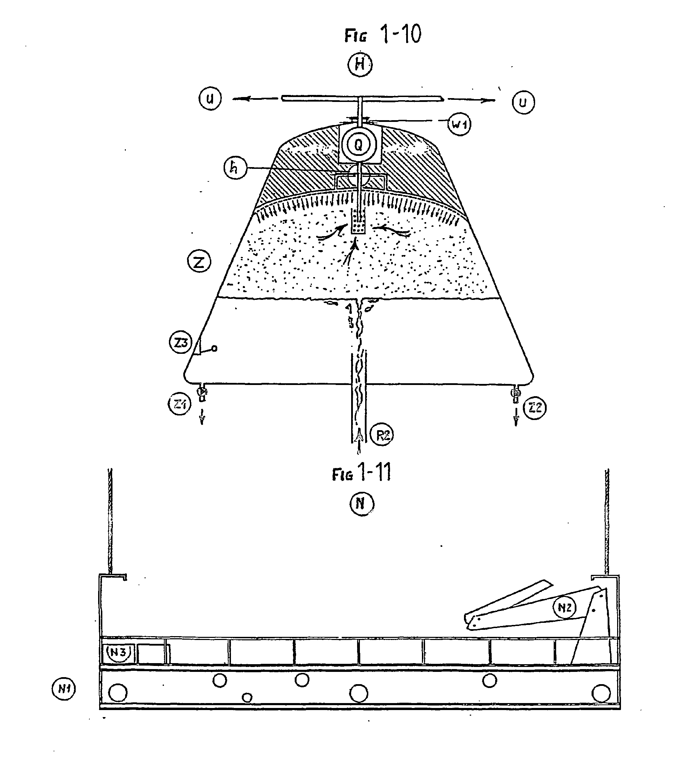

La station sous-marine autonome
- La figure 1-1 montre une vue longitudinale de la station sans équipements opérationnels.
- La figure 1-2 montre une vue en plan de la station sans équipements opérationnels.
- La figure 1-3 montre une vue latérale de la station sans équipements opérationnels.
- La figure 1-4 montre une vue longitudinale de la station équipée du module de traitement des hydrocarbures
- La figure 1-5 montre une vue en plan de la station équipée du module de traitement des hydrocarbures
- La figure 1-6 montre une vue latérale de la station équipée du module de traitement des hydrocarbures
- La figure 1-7 montre une vue longitudinale de la station équipée du module dit « nacelle »
- La figure 1-8 montre une vue en plan de la station équipée du module dit « nacelle »
- La figure 1-9 montre une vue latérale de la station équipée du module dit « nacelle »
- La figure 1-10 montre une vue en coupe verticale du module de traitement des hydrocarbures
- La figure 1-11 montre une vue latérale de la nacelle
- La figure 1-12 montre une vue du principe de tension de câbles de la colonne souple

Les dessins, plans, élévations et coupes donnent des dimensions et des méthodes de construction de principe de la station sous marine autonome sans équipements spécifiques de travail, et avec différentes versions d'équipements spécifiques de travail. Selon les besoins, la station peut être construite dans des configurations différentes et des dimensions autres.

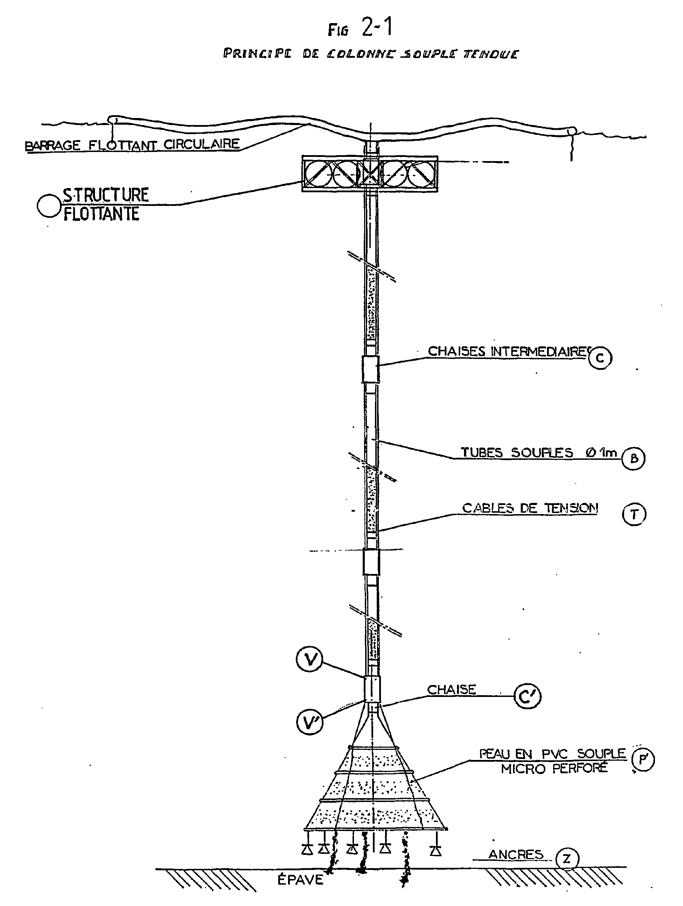

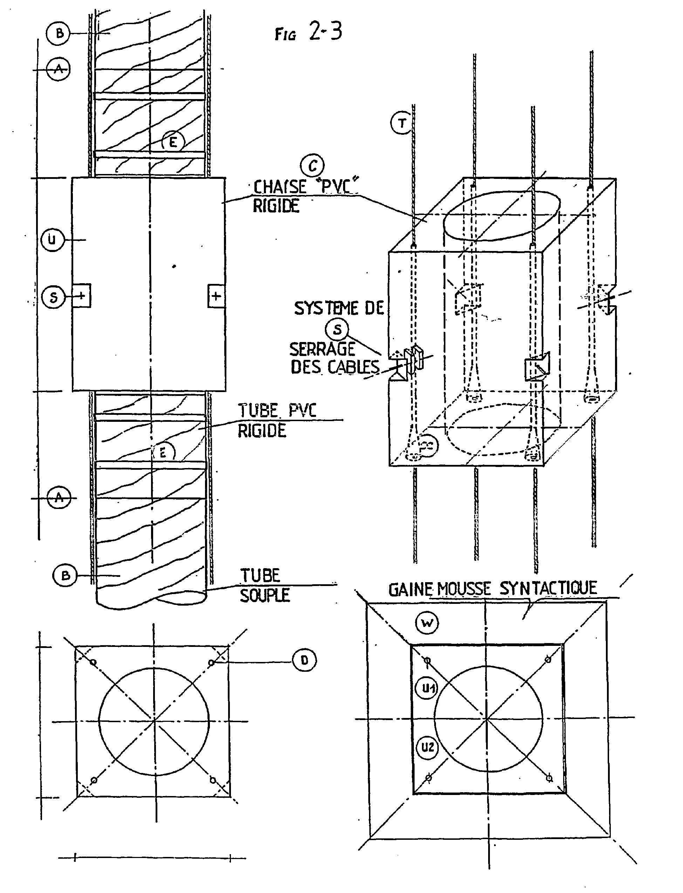

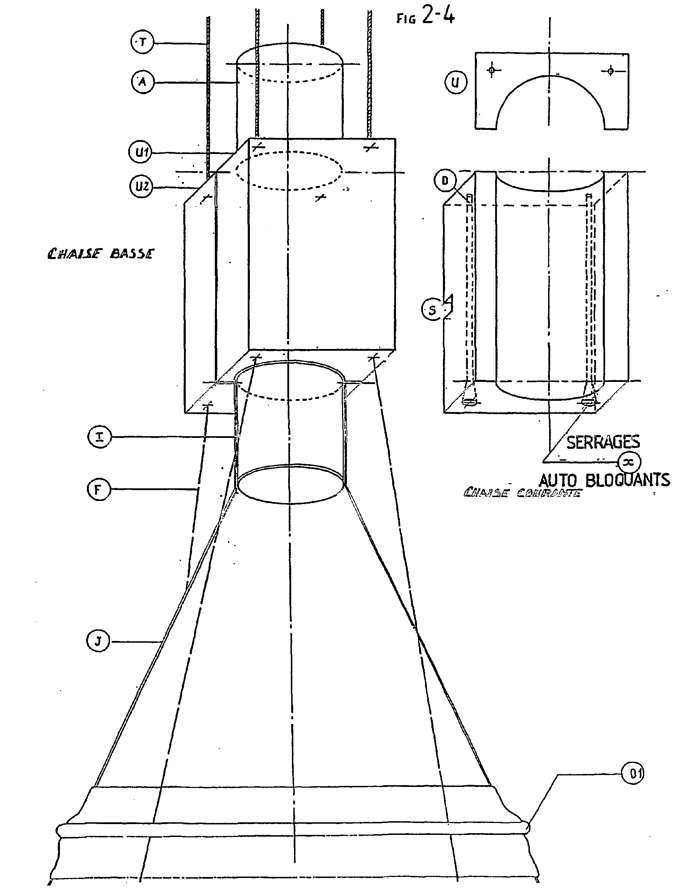

La colonne souple ou riser pour grandes profondeurs
- La figure 2-1 montre le principe de la colonne dans son ensemble sans définir le choix de la structure porteuse, qui peut selon les cas être une structure sous marine stable, un bâtiment de surface ou encore un système autonome de surface comprenant une structure flottante et une zone de récupération par barrage flottant.

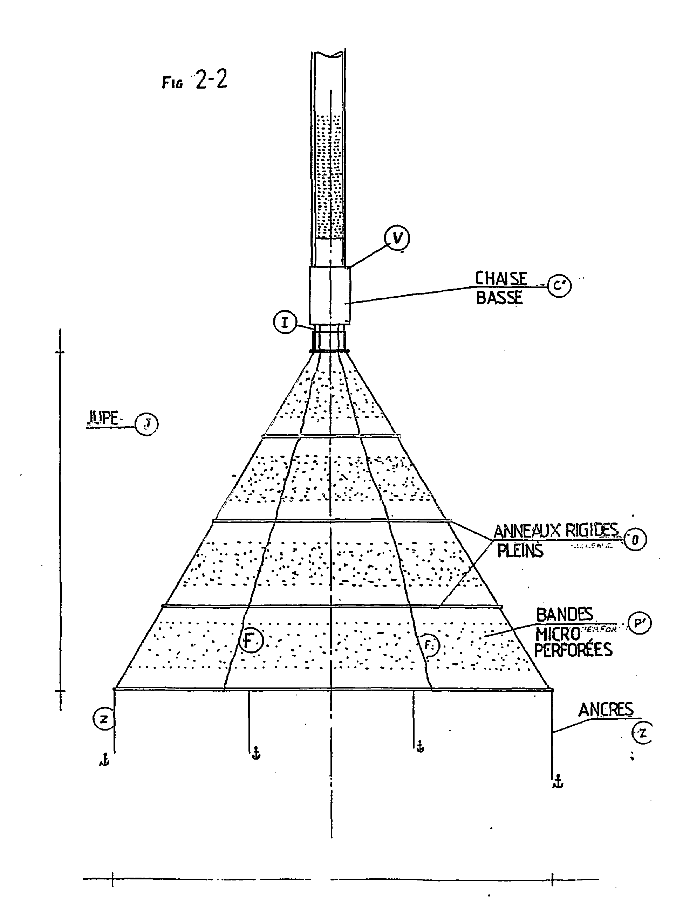

- La figure 2-2 montre la partie basse de la colonne ou jupe (J).
- La figure 2-3 montre le détail d'une chaise (C), le passage et le blocage des câbles (T1 à T4), la jonction des parties souples de la colonne (B) sur les chaises (C).
- La figure 2-4 montre la chaise basse et sa jonction avec la jupe (J), une des deux demi coques (U1 ou U2) formant le bloc de chaise une fois collées sur le tube rigide (A), les canaux de passage des câbles (D), le manteau de mousse syntactique (W).

## Revendications

1. - Station sous-marine autonome conçue pour travailler en totale immersion, **caractérisée en ce qu'**elle comporte
- une structure (S) comportant des ballasts creux (C) en plusieurs systèmes séparés,
- une altitude de cette structure dans un élément liquide dans lequel elle évolue étant réglable d'une manière autonome en positif comme en négatif,
- en fonction de sa charge initiale en équipements et chargements,
- et en fonction d'une ou plusieurs charges à délivrer ou à acquérir en cours d'opération,
- une masse volumique générale de la structure égale à celle de l'élément liquide dans lequel la structure évolue étant atteinte à l'aide d'un dispositif de pompe et de compresseur équilibrant la charge des ballasts,
- les systèmes multiples de ballasts (A) séparés agissant comme moyen stabilisateur d'assiette, de compensateur de variation de charge et de propulsion verticale afin de maintenir l'ensemble à u ne profondeur voulue, sans appui, tout en se maintenant en position stable, horizontalement et verticalement,
- cette structure comportant plusieurs ponts modulables (P1, P2, P3, P4), et étant équipée sur ses différents ponts de tous les outils, contenants ou espaces nécessaires à ses tâches,
- cette structure, en autonomie énergétique (B1, B2), étant gérée par un ordinateur embarqué comportant des automatismes (k).

2. - Station selon la revendication 1, **caractérisée en ce qu'**elle est équipée de batteries.

3. - Station selon l'une des revendications 1 à 2 , **caractérisée en ce qu'**elle comporte, accessibles par des plongeurs, un poste sous-marin (K) de commandes gérant tous les paramètres de la station et ses outils automatisés.

4. - Station selon l'une des revendications 1 à 3 , **caractérisée en ce qu'**elle comporte un poste de double commandes, sous forme de bouée technique (Y), reliée par câble à la station, et permettant toutes les transmissions ainsi qu'une totale gestion en surface de ses paramètres et de ses actions.

5. - Station selon la revendication 4, **caractérisée en ce qu'**elle comprend d es moyens d e maintenir et modifier s a position e n fonction de données GPS régulièrement relevées et de sa position pré établie, grâce à des équipements autonomes et automatisés, et grâce à sa bouée technique et à des moyens de transmission.

6. - Station selon l'une des revendications 1 à 5, **caractérisée en ce que** son aménagement est modulable et particulièrement ses ponts dont les surfaces sont porteuses ou libres de planchers.

7. - Station selon l'une des revendications 1 à 6, **caractérisée en ce qu'**elle comporte des caissons (C) munis de compartiments servant à l'ajustement de la masse volumique globale, uniquement au lancement d'une opération, par remplissage ou évacuation d'eau de lestage.

8. - Station selon l'une des revendications 1 à 7, **caractérisée en ce qu'**elle comporte un dispositif motorisé de tension de câbles, assisté par informatique, pour envoyer par grands fonds des équipements tel qu'une nacelle ou d'autres moyens de récupération.

9. - Station selon l'une des revendications 1 à 8, **caractérisée en ce qu'**elle est dotée d'une unité de traitement d'hydrocarbures munie d'un module opérationnel de récupération d'hydrocarbures, soit en surface soit en grandes profondeurs, et d'une nacelle.

10. - Station selon la revendication 9, **caractérisée en ce que** le module opérationnel de récupération d'hydrocarbures comporte des moyens pour prélever soit par pompage, soit par captage, des remontées spontanées d'émanations gazeuses, liquides, visqueuses ou solides.

11. - Station selon l'une des revendications 9 à 10, **caractérisée en ce que** le module opérationnel de traitement d'hydrocarbures comporte un dispositif par captage de remontées spontanées, un séparateur permettant de maîtriser ce captage par la variation de la vitesse d'évacuation de l'eau séparée, et pour une suite de phases successives du traitement, une chambre de traitement chimique, une chambre de pompage et une zone automatisée de stockage.

12. - Station selon l'une des revendications 9 à 11, **caractérisée en ce que** le dispositif de pompage est direct, est accessible depuis des bâtiments de surface, est aménagé sur la partie haute d'une chambre de pompage du module de traitement des hydrocarbures (H), et permet d'utiliser la station comme intermédiaire de flux continu entre zones de récupération et des moyens classiques de surface.

13. - Station selon l'une des revendications 9 à 12, **caractérisée en ce que** le dispositif de pompage est direct, est accessible pour des bâtiments de surface, est aménagé sur la ou les cuves de stockage (U) des hydrocarbures, et permet d'utiliser la station comme relais de stockage.

14. - Station selon l'une des revendications 9 à 13, **caractérisée en ce qu'**elle comporte un système de contrôle du remplissage relié à un poste de contrôle (K) et déclenchant des alertes, aménagé dans une ou des cuves de stockage (U) d'hydrocarbures permettant de planifier des interventions de surface.

15. - Station selon l'une des revendications 9 à 14, **caractérisée en ce que** les accès de pompage direct situés sur la cuve de stockage (U) et sur la partie haute de l'unité de traitement des hydrocarbures comportent des moyens pour qu'une ouverture et une obturation de la cuve ne puissent se faire qu'une fois effectué le raccordement d'un tuyau de pompage, le tuyau de pompage étant lui-même équipé d'un même système.

16. - Station selon l'une des revendications 1 à 15, **caractérisée en ce qu'**elle comporte un module nacelle opérationnel suspendu à des câbles depuis un pont intermédiaire (P2) de la structure, la structure restant à des profondeurs modérées et à portée de plongeurs, la nacelle travaillant par plus grands fonds.

17. - Station selon la revendication 16, **caractérisée en ce que** la nacelle (N) comporte un plateau technique (N1) embarquant un double banc de batteries autonomes (N3) et tous les équipements et instruments utiles à ses missions.

18. - Station selon l'une des revendications 16 à 17, **caractérisée en ce que** la nacelle comporte un robot configuré en forme de bras articulé (N2) piloté depuis la structure, capable d'utiliser des outils interchangeables de fouille, de carottage et de forage, de pinces préhensiles, et autres instruments utiles à ses missions.

19. - Station selon l'une des revendications 16 à 18, **caractérisée en ce que** la nacelle (N) comporte une surface conçue pour servir de benne /monte-charge ou de plateau pour d'autres robots sous-marins.

20. - Station selon l'une des revendications 16 à 19, **caractérisée en ce que** la nacelle (N), alimentant ses équipements automatisés par ses propres batteries (b13), est reliée en plongée par câble de transmission de données au poste de contrôle de la structure porteuse restée plus haut, et est manipulable en très grandes profondeurs depuis ladite station.

21. - Station selon l'une des revendications 1 à 20, **caractérisé en ce qu'**elle comporte une colonne en film de matière souple, résistante et de grand diamètre (A) destinée à l'immersion en milieu marin sur une longueur de plusieurs milliers de mètres et suspendue depuis une sous face de la structure ou depuis une position stable en surface, fabriquée en tronçons d'une seule pièce de deux cents mètres (B1 à Bn), supportée à égale distance par des chaises (C) rigides maintenues entre elles par des câbles de tension (T1 à T4) reportant les charges, et terminée en partie basse par une jupe de captage (J) ancrée (Z) aux fonds marins.

22. - Station selon la revendication 21, **caractérisée en ce que** le film souple, constituant la colonne (B) et la jupe (J), est perforé sur une partie de ses surfaces.

23. - Station selon l'une des revendications 21 à 22, **caractérisée en ce que** le film de matière souple (B) est armé ou renforcé par un treillis de fibres de Nylon, collé ou noyé dans l'épaisseur du film.

24. - Station selon l'une des revendications 21 à 23, **caractérisée en ce que** les tronçons de plus ou moins 200 mètres faits de film de matière souple sont renforcés en leur milieu et de part et d'autre tous les 50 mètres d'anneaux semi-rigides (R1 à R3), soit en fabrication simultanée et de même matière, soit collés.

25. - Station selon l'une des revendications 21 à 24, **caractérisée en ce que** la base de la colonne souple comporte une jupe en forme de cône ou d'entonnoir (J) de matière souple et d'armatures circulaires indéformables (O1 à O4).

26. - Station selon l'une des revendications 21 à 25, **caractérisée en ce que** les chaises rigides (C) sont gainées sur leur partie cubique d'un épais manteau de mousse syntactique(W).

27. - Utilisation d'une station selon l'une des revendications 1 à 26 pour collecter des émanations sous-marines gazeuses, liquides, visqueuses ou solides remontant vers la surface.

## Claims

1. - Autonomous underwater station conceived to work into total immersion, **characterized in that** it comprises
- a structure (S)made of hollow ballasts (C) in several separated systems,
- a position of altitude of this structure in the liquid element in which it moves being adjustable into positive as into negative ,
- according to its initial equipment load and loadings,
- and according to one or more loads to be delivered or acquire in the course of operation,
- a general density of the structure equal to that of the liquid element in which the structure moves being reached using a device of pump and compressor balancing the load of the ballasts,
- the multiple system of ballasts(A) separate acting like average stabilizer of plate, compensator of vertical propulsion and radial force in order to maintain the whole with a wanted depth, without support, while being maintained in stable position, horizontally and vertically,
- this structure comprising several flexible decks (P1, P2, P3, P4), and being equipped on its various decks with all the tools, containers or spaces necessary to its tasks,
- this structure, in energy autonomy (B1, B2), being managed by an embedded computer controlling the automatisms (K).

2. - Station according to claim 1, **characterized in that** it is equipped with batteries.

3. - Station according to one of claims 1 to 2, **characterized in that** it comprises, accessible by divers, an underwater control deck (K) managing all the parameters of the station and its automated tools.

4. - Station according to one of claims 1 to 3, **characterized in that** it comprises a double control deck, in the form of technical buoy (Y), connected by cable to the station, and allowing all the transmissions as well as a total management from the surface of its parameters and its actions.

5. - Station according to claim 4, **characterized in that** it includes of the means of maintaining and of modifying its position according to regularly recorded data, GPS and of its established pre position, allowed by its autonomous and automated equipment, and its technical buoy and transmission resources.

6. - Station according to one of claims 1 to 5, **characterized in that** its installation is flexible and particularly its decks whose surfaces are carrying or free of floors.

7. - Station according to one of claims 1 to 6, **characterized in that** it comprises of the boxes (C) provided with compartments being used for the adjustment of the total density, only with the launching of an operation, by filling or drainage of water of ballasting.

8. - Station according to one of claims 1 to 7, **characterized in that** it comprises a motorized device of tension of cables, assisted by data processing, to send by deep seas of the equipment such as nacelle or other means of recovery.

9. - Station according to one of claims 1 to 8, **characterized in that** it is equipped with a treatment unit of hydrocarbons provided with an operational module with hydrocarbon recovery, either on the surface or in great depths, and of a nacelle.

10. - Station according to claim 9, **characterized in that** the operational module of hydrocarbon recovery comprises means to take either by pumping, or by collecting, of the spontaneous increase of emanations gas, liquid, viscous or solid.

11. - Station according to one of claims 9 to 10, **characterized in that** the operational module of treatment of hydrocarbons comprises a device by collecting of spontaneous increase, a separator making it possible to control this collecting by the variation the speed of separated drainage, and succession of successive phases of the treatment, chemical curing chamber, room of pumping and automated zone of storage.

12. - Station according to one of claims 9 to 11, **characterized in that** the device of pumping is direct, is accessible from surface ships, is arranged on the high part of a pumping room of the module of hydrocarbons treatment (H), and makes it possible to use the station as intermediary of continuous flow between zones of recovery and the traditional means of surface.

13. - Station according to one of claims 9 to 12, **characterized in that** the device of pumping is direct, is accessible for surface ships, is arranged on the tanks of (U) hydrocarbons storage, and makes it possible to use the station as relay of storage.

14. - Station according to one of claims 9 to 13, **characterized in that** it comprises a system of control of the filling connected to a checkpoint (K) and starting alarms, arranged in one or number of the tanks of (U) hydrocarbons storage allowing to plan interventions of surface.

15. - Station according to one of claims 9 to 14, **characterized in that** the accesses of direct pumping located on the tank of (U) storage and the high part of the hydrocarbons treatment unit comprise means so that an opening and a sealing of the tank can be made only one time carried out the connection of a pipe of pumping, the pipe of pumping itself being equipped with the same system.

16. - Station according to one of claims 1 to 15, **characterized in that** it comprises an operational module nacelle suspended with cables since an intermediate deck (P2) of the structure, the structure remaining with moderate depths and range of divers, the nacelle working by deep seas.

17. - Station according to claim 16, **characterized in that** the nacelle (N) comprises a technical plate (N1) embarking a double bench of autonomous batteries (N3) and all the equipment and instruments useful to its missions.

18. - Station according to one of claims 16 to 17, **characterized in that** the nacelle comprises a robot configured in the shape of hinged jib (N2) controlled since the structure, able to use interchangeable tools of excavation, of coring and drilling, prehensile grips, and other instruments useful to its missions.

19. - Station according to one of claims 16 to 18, **characterized in that** the nacelle (N) comprises a surface conceived to be used of hoist or plate for other underwater robots.

20. - Station according to one of claims 16 to 19, **characterized in that** nacelle (N), supplying its automated equipments by its own batteries (b13), is connected in diving by transmission cable of data to the checkpoint of the carrying structure remained higher, and is easy to handle in very great depths from the aforementioned station.

21. - Station according to one of claims 1 to 20, **characterized in that** it comprises flexible a matter film column, resistant and of large diameter (A) intended for the immersion in marine environment over a length of several thousands of meters and hanged down from under face of the structure or a stable position on the surface, manufactured in sections of only one part of two hundred meters (B 1 to Bn), supported at equal distance by rigid chairs (C) maintained between them by cables of tension (T1 to T4) deferring the loads, and finished partly low by a skirt of collecting (J) anchored (Z) to sea-beds.

22. - Station according to claim 21, **characterized in that** the flexible film, constituting the column (B) and the skirt (J), is perforated on part of its surfaces.

23. - Station according to one of claims 21 to 22, **characterized in that** the flexible matter film (B) is armed or reinforced by a Nylon fiber lattice, stuck or drowned in the thickness of film.

24. - Station according to one of claims 21 to 23, **characterized in that** the sections of more or less 200 meters made of flexible matter film are reinforced in their medium and on both sides every 50 meters of semi-rigid rings (R1 to R3), either in simultaneous manufacture and of the same matter, or stuck.

25. - Station according to one of claims 21 to 24, **characterized in that** the base of the flexible column comprises a skirt in the shape of cone or funnel (J) of flexible matter and circular reinforcements unbuckling (O1 to 04).

26. - Station according to one of claims 21 to 25, **characterized in that** the rigid chairs (C) are sheathed on their cubic part of a thick foam syntactique(W) coat.

27. - Use of a station according to one of claims 1 to 26 to collect underwater emanations like gas, liquid, viscous or solid going up towards surface.

## Patentansprüche

1. - Autonome Unterwasserstation, entwickelt, um völlig unter Wasser zu arbeiten, **gekennzeichnet durch**
- - ein Gerüst (S), das hohle Tanks (C) in mehreren separaten Systemen beinhaltet,
- - eine positiv oder negativ steuerbare Höhenlage dieses Gerüsts in einer Flüssigkeit, in der es sich bewegt,
- entsprechend der Ausgangslast an Ausrüstungen und Ladung,
- entsprechend einer oder mehrerer Ladungen, die während des Vorgangs ausgeladen oder aufgenommen werden,
- eine allgemeine Dichte des Gerüsts, die der Dichte der Flüssigkeit entspricht, in der sich das Gerüst bewegt und die mittels einer Pumpen- und Verdichtervorrichtung erreicht werden kann, die die Ladung der Tanks ausgleicht,
- das Mehrsystem der separaten Tanks (A) agiert als Lagestabilisator und Ausgleichsvorrichtung bei unterschiedlicher Ladung und senkrechtem Antrieb, um die gesamte Station ohne Unterstützung in der gewollten Tiefe und sowohl in vertikaler als auch horizontaler Lage stabil halten zu können,
- dieses Gerüst weist mehrere modulare Brücken (P1,P2,P3,P4) auf, die jeweils mit allem Werkzeug ausgestattet sind, und verfügt über ausreichend Behälter oder Freiraum, die neben dem Werkzeug für die Aufgaben notwendig sind.
- dieses selbst versorgte (B1,B2) Gerüst wird von einem eingebetteten Computer verwaltet, der automatisiert (K) arbeitet,

2. - Station gemäß Patentanspruch 1, **gekennzeichnet durch** die Ausstattung mit Akkumulatoren.

3. - Station gemäß einem der Patentansprüche 1 bis 2, **gekennzeichnet durch** ein Unterwasser-Steuergerät, das für Taucher zugänglich ist und alle Parameter der Station und ihrer automatisierten Werkzeuge verwaltet.

4. - Station gemäß einem der Patentansprüche 1 bis 3, **gekennzeichnet durch** ein Doppel-Steuergerät in Form einer technischen Boje (Y), die mittels Kabel an die Station angeschlossen ist und die alle Übertragungen sowie die gesamte Verwaltung der Parameter und Aktionen von der Oberfläche aus ermöglicht.

5. - Station gemäß Patentanspruch 4, **gekennzeichnet durch** autonome und automatisierte Ausrüstungen, die technische Boje und Übertragungsmittel, die es ermöglichen, ihre Position, entsprechend den GPS-Daten, die regelmäßig abgenommen werden und ihrer zuvor bestimmten Position, zu halten oder zu ändern.

6. - Station gemäß einem der Patentansprüche 1 bis 5, **gekennzeichnet durch** ihre modulare Ausstattung und insbesondere **durch** ihre Brücken, deren Auflagen über Beläge verfügen oder frei von diesen sind.

7. - Station gemäß einem der Patentansprüche 1 bis 6, **gekennzeichnet durch** Senkkästen (C) mit unterschiedlichen Abteilen, die lediglich zum Ausgleich der Gesamtdichte zu Beginn eines Vorgangs **durch** Zulaufen oder Ablassen von Ballastwasser dienen.

8. - Station gemäß einem der Patentansprüche 1 bis 7, **gekennzeichnet durch** eine motorbetriebene und computergestützte Kabelspannvorrichtung, um Ausrüstungen, wie eine Gondel oder andere Auffangmittel, in große Tiefen herabzulassen.

9. - Station gemäß einem der Patentansprüche 1 bis 8, **gekennzeichnet durch** die Einheit zur Kohlenwasserstoffverarbeitung, die, entweder an der Oberfläche oder in großen Tiefen, mit einem operativen Rückgewinnungsmodul für Kohlenwasserstoff und einer Gondel ausgestattet ist.

10. - Station gemäß Patentanspruch 9, **gekennzeichnet dadurch, dass** dieses operative Rückgewinnungsmodul für Kohlenwasserstoff Mittel beinhaltet, um, entweder durch Pumpen oder Absaugen, unkontrolliert aufsteigende entwichene Gase, mehr oder minder zähe oder feste Flüssigkeiten zu entnehmen.

11. - Station gemäß einem der Patentansprüche 9 bis 10, **gekennzeichnet dadurch, dass** dieses operative Rückgewinnungsmodul für Kohlenwasserstoff eine Absaugvorrichtung für unkontrolliert aufsteigende Gase oder Flüssigkeiten und einen Abscheider beinhaltet, der dieses Absaugen durch Ändern der Ablassgeschwindigkeit des abgeschiedenen Wassers lenkt. Für die schrittweise Verarbeitung beinhaltet es darüber hinaus eine chemische Verarbeitungskammer, eine Pumpenkammer und einen automatisierten Lagerbereich.

12. - Station gemäß einem der Patentansprüche 9 bis 11, **gekennzeichnet durch** eine direkte Pumpvorrichtung, die von den Überwasserschiffen aus zugänglich ist und am oberen Teil einer Pumpenkammer des Rückgewinnungsmoduls für Kohlenwasserstoff (H) angebracht ist. Sie ermöglicht es, die Station als Zwischenpunkt des kontinuierlichen Flusses zwischen dem Rückgewinnungsbereich und den herkömmlichen Mitteln über Wasser zu verwenden.

13. - Station gemäß einem Patentanspruch 9 bis 12, **gekennzeichnet durch** eine direkte Pumpvorrichtung, die von den Überwasserschiffen aus zugänglich ist und auf dem oder den Tanks (U) zur Kohlenwasserstofflagerung (H) angebracht ist. Sie ermöglicht es, die Station als Speicherrelais zu verwenden.

14. - Station gemäß einem der Patentansprüche 9 bis 13, **gekennzeichnet durch** ein Kontrollsystem der Füllhöhe, das an ein Kontrollgerät (K) angeschlossen ist und den Alarm auslöst. Es ist in einen oder mehrere Tanks zur Kohlenwasserstofflagerung (U) eingebaut und ermöglicht es, Eingriffe von der Oberfläche zu planen.

15. - Station gemäß einem der Patentansprüche 9 bis 14, **gekennzeichnet dadurch, dass** die auf dem Lagertank (U) und am oberen Teil der Einheit zur Kohlenwasserstoffverarbeitung befindlichen Direktpumpzugänge Mittel beinhalten, die ein Öffnen und Verschließen des Tanks nur bei angeschlossenem Pumpschlauch ermöglichen. Der Pumpschlauch selbst ist ebenfalls mit einem solchen System ausgestattet.

16. - Station gemäß einem der Patentansprüche 1 bis 15, **gekennzeichnet durch** ein operatives Gondelmodul, das an einer Zwischenbrücke (P2) des Gerüsts an Kabeln aufgehängt ist. Das Gerüst verbleibt in mittlerer Tiefe und in der Nähe der Taucher, die Gondel arbeitet in größeren Tiefen.

17. - Station gemäß Patentanspruch 16, **gekennzeichnet dadurch, dass** die Gondel (N) eine technische Plattform (N1) beinhaltet, in die eine Akkumulatoren-Doppelreihe (N3) sowie alle Ausrüstungen und Instrumente eingebettet sind, die für ihre Aufgaben nützlich sind.

18. - Station gemäß einem der Patentansprüche 16 bis 17, **gekennzeichnet dadurch, dass** die Gondel einen als Gelenkarm konfigurierten Roboter (N2) beinhaltet, der vom Gerüst aus gesteuert wird und auswechselbare Werkzeuge zum Ausheben, Kernbohren und Bohren sowie Greifzangen und andere Instrumente, die für ihre Aufgaben nützlich sind, verwenden kann.

19. - Station gemäß einem der Patentansprüche 16 bis 18, **gekennzeichnet dadurch, dass** die Gondel (N) eine Fläche aufweist, die als Lademulde/Ladeaufzug oder als Plattform für weitere Unterwasserroboter dient.

20. - Station gemäß einem der Patentansprüche 16 bis 19, **gekennzeichnet dadurch, dass** die Gondel (N), die ihre automatisierten Ausrüstungen durch eigene Akkumulatoren (b13) versorgt, über ein Datenübertragungskabel unter Wasser mit dem Kontrollgerät des weiter oben befindlichen Traggerüsts verbunden und in großen Tiefen von der Station aus steuerbar ist.

21. - Station gemäß einem der Patentansprüche 1 bis 20, **gekennzeichnet durch** eine Säule aus weicher widerstandsfähiger Folie und mit großem Durchmesser (A), die für ein Eintauchen im Meer über eine Strecke von mehreren Tausend Metern vorgesehen und an einer Unterseite des Gerüsts oder an einer stabilen Stelle über Wasser aufgehängt ist. Sie ist aus mehreren Abschnitten gefertigt, die jeweils aus einem Stück von zweihundert Metern Länge (B1 bis Bn) bestehen, und wird in gleichen Abständen **durch** feste Böcke ©, die untereinander **durch** lastverteilende Spannkabel (T1 bis T4) gehalten werden, gestützt. Im unteren Bereich endet die Säule in einer im Meeresboden verankerten (Z) Saugschürze (J).

22. - Station gemäß Patentanspruch 21, **gekennzeichnet dadurch, dass** ein Teil der Oberfläche der weichen Folie, die Säule (B) und Schürze (J) bildet, perforiert ist.

23. - Station gemäß einem der Patentansprüche 21 bis 22, **gekennzeichnet dadurch, dass** die weiche Folie (B) mit einem Nylonfasergeflecht ausgerüstet oder verstärkt ist, das geklebt oder in die Folienschicht eingelassen ist.

24. - Station gemäß einem der Patentansprüche 21 bis 23, **gekennzeichnet dadurch, dass** die Abschnitte von mehr oder weniger 200 Metern, gefertigt aus weicher Folie, in ihrer Mitte und an beiden Enden in Abständen von 50 Metern mit halbstarren Ringen (R1 bis R3), entweder direkt bei der Herstellung und aus demselben Werkstoff oder geklebt, verstärkt sind.

25. - Station gemäß einem der Patentansprüche 21 bis 24, **gekennzeichnet dadurch, dass** die Basis der weichen Säule eine Schürze in Form eines Kegels oder Trichters (J) aus weichem Werkstoff und formbeständigen Rundbeschlägen (O1 bis O4) beinhaltet.

26. - Station gemäß einem der Patentansprüche 21 bis 25, **gekennzeichnet dadurch, dass** die festen Böcke © an ihrem kubischen Teil mit einem dicken Mantel aus syntaktischem Schaum (W) umhüllt sind.

27. - Verwendung einer Station gemäß einem der Patentansprüche 1 bis 26, um entweichende und an die Oberfläche steigende Gase, mehr oder minder zähe oder feste Flüssigkeiten zu sammeln.
